# DEMANDE DE BREVET EUROPEEN

(11) **EP 4 607 479 A1**
(43) Date de publication de la demande: **27.08.2025**
(21) Numéro de dépôt: 25159561.7
(22) Date de dépôt: 24.02.2025
(51) Int. Cl.: G06V 10/82, G06V 40/12

(54) **MÉTHODE ET SYSTÈME D'ENCODAGE D'UNE LISTE DE MINUTIES D'UN DACTYLOGRAMME**

(30) Priorité: 26.02.2024 FR 2401839
(71) Demandeur: IDEMIA Public Security France, 92400 Courbevoie (FR)
(72) Inventeur: VIDEAU, Victor, 92400 COURBEVOIE (FR); KAZDAGHLI, Laurent, 92400 COURBEVOIE (FR)
(74) Mandataire: IPS

(57) **Abrégé**

Méthode, mise en oeuvre par ordinateur, d'encodage d'une liste de minuties d'un dactylogramme, ladite méthode prend, en données d'entrée, les coordonnées associées à chaque minutie d'une liste de minuties d'un dactylogramme, et fournit, en donnée de sortie, un vecteur d'encodage de taille fixe représentatif de la liste des minuties dudit dactylogramme, la méthode comprend les étapes suivantes :
(a) concaténer les coordonnées de chaque minutie de la liste de minuties sous la forme d'une matrice source de dimension ;
(b) projeter la matrice source de dimension vers un espace d'une dimension supérieure à la dimension de ladite matrice source à l'aide d'un modèle de projection préalablement entrainé pour former une matrice projetée de dimension ;;
(c) inférer une matrice d'inférence de dimension par application, sur la matrice intermédiaire, d'un réseau de neurones en graphes préalablement entrainé ;
(d) agréger les valeurs de la matrice d'inférence en un vecteur de taille fixe à l'aide d'une modèle d'agrégation préalablement défini, ledit vecteur de taille fixe étant le vecteur d'encodage de taille fixe représentatif de la liste des minuties du dactylogramme.

## Description

### Domaine technique

L'invention concerne une méthode d'encodage d'une liste de minuties d'un dactylogramme. Elle concerne également une méthode et un système d'identification d'une liste de minuties parmi les listes de minuties d'une base de données, les minuties étant encodées selon ladite méthode d'encodage.

### Arrière-plan technique

La dactyloscopie est un procédé d'identification des individus fondée sur l'exploitation des dactylogrammes qui sont également connus sous les expressions « d'empreintes digitales » et/ou « d'empreintes palmaires ». Ce procédé est notamment utilisé par les services d'anthropométrie judiciaire ou par les systèmes civils d'identification lors, par exemple, des démarches administratives, de passage aux frontières ou d'accès à des lieux sécurisés.

Les dactylogrammes sont des dessins que forment les traces laissées sur les surfaces par les dermatoglyphes des doigts et/ou des paumes de main. Les dermatoglyphes sont les sillons superficiels formés sur les paumes, les plantes et la pulpe des doigts par les crêtes dermiques et disposés en lignes ou spirales. Ils sont propres à chaque individu et les dessins qu'ils forment en constituent une « carte d'identité » anthropométrique grâce à laquelle il peut être identifié.

A la différence de l'authentification où un dactylogramme acquis pour un individu est comparé à un seul ou à un nombre très limité de dactylogrammes de référence (1:1), l'identification d'un individu à partir d'un dactylogramme requiert la comparaison de ce dactylogramme avec de nombreux autres dactylogrammes préalablement acquis auprès de plusieurs individus (1:N) et généralement stockés dans une base de données. Parce que les dactylogrammes sont des dessins aux caractéristiques complexes et que le nombre de comparaisons nécessaires lors d'une identification peut devenir très élevé, le processus d'indentification peut demeurer long malgré les ressources en calcul des dispositifs de traitement de données actuellement disponibles. Afin de réduire le temps nécessaire pour la conduite de cette opération, il est connu de classer les dactylogrammes selon différentes classes fondées sur certaines caractéristiques morphologiques des dermatoglyphes. A titre d'exemples, ces caractéristiques morphologiques peuvent être la forme générale du dermatoglyphe (orientation des boucles, arches, spirales...) selon notamment les catégories de Henry Faulds, Francis Galton et Edward Henry, le tracé global des crêtes, les « minuties » constituées par des points singuliers le long des crêtes (terminaison d'une crête, bifurcation...), la forme des crêtes, les pores ou encore les cicatrices.

Parmi ces caractéristiques morphologiques, les minuties font l'objet d'une attention particulière car, du fait de leur singularité, la comparaison des minuties entre dactylogrammes participe à procurer une valeur probante à toute tentative d'identification. Par exemple, selon la règle de Balthazar, 17 ou 18 minuties communes suffisent à certifier la concordance entre deux dactylogrammes, ou, selon la règle de Locard, la preuve dactyloscopique est faite lorsqu'entre deux dactylogrammes ne présentent aucune discordance et partagent 12 minuties communes.

Il est courant de classer les minuties en deux catégories : les bifurcations et les terminaisons. Les bifurcations comprennent les bifurcations droites ou gauches, les lacs et les ponts. Les terminaisons comprennent les terminaisons droites ou gauches, les îles et les crochets. Cependant, cette répartition en deux catégories n'a aucun caractère normatif ou limitatif. Il en existe d'autres combinaisons de sorte qu'il est généralement entendu par minutie tout point singulier et/ou toute discontinuité présent le long des crêtes des dermatoglyphes.

Les minuties sont généralement représentées et stockées dans les bases de données sous la forme de coordonnées dans un espace à trois dimensions, tel que décrit notamment dans la norme ISO/IEC 19794-2:2005, Information Technology-Biometric Data Interchange Formats-Part 2: Finger Minutiae Data, 2005. Les deux premières dimensions correspondent respectivement à l'abscisse et à l'ordonnée de la minutie dans un repère du dactylogramme. La troisième dimension correspond à l'angle d'orientation de la minutie par rapport à l'axe horizontal de ce même repère. Ainsi, contrairement aux dactylogrammes conservés sous la forme d'image, le stockage informatique des minuties sous cette forme requiert moins d'espace mémoire. Elles permettent en outre une meilleure interopérabilité des bases de données et réduisent le temps de calcul lors des opérations d'identification ou d'authentification.

Tous ces avantages participent à l'adoption des minuties comme caractéristiques de premier choix lors du traitement des dactylogrammes en vue de la constitution de bases de données d'identification biométrique au point qu'elles constituent très souvent les seules données disponibles. Autrement dit, dans ces bases de données, les images des dactylogrammes ne sont pas conservées et seules les coordonnées géométriques des points constituant les minuties le sont.

Les procédés et systèmes d'identification des dactylogrammes sont soit manuels, soit semi-automatiques ou soit totalement automatiques. La taille des bases de données et les puissances de calcul des dispositifs de traitement de donnés étant sans cesse croissantes, les systèmes d'identification automatique par dactylogrammes (AFIS - « Automtated Fingerprint Identification Systeme ») fondés sur l'exploitation des minuties sont de plus en plus utilisés. Ils permettent d'analyser rapidement et efficacement une liste de dactylogrammes candidats susceptibles de correspondre à un dactylogramme dont le propriétaire est à identifier.

Les procédés automatiques d'identification mis en œuvre par ce type de système comprennent généralement deux étapes principales. Dans une première étape, il est recouru à un ou plusieurs algorithmes de criblage permettant l'élimination rapide des dactylogrammes candidats partageant le moins de caractéristiques communes avec le dactylogramme dont l'identification du propriétaire est recherchée. Dans une deuxième étape, un ou plusieurs algorithmes, d'ordinaire plus lents et plus précis, procèdent à une comparaison dudit dactylogramme avec les dactylogrammes candidats restants afin d'établir une liste des meilleures correspondances.

Parmi les procédés automatiques d'identification, ceux fondés sur la mise en œuvre de réseaux de neurones nécessitent généralement une étape préalable d'encodage des dactylogrammes, qu'ils soient fournis sous la forme d'images, de listes de minuties ou de leur combinaison. Lors de cette étape d'encodage, les caractéristiques distinctives pertinentes des dactylogrammes sont extraites, sélectionnées puis transcrites en instructions déchiffrables par un dispositif de traitement de données, tel qu'un ordinateur, et adaptées à faire l'objet d'opérations calculatoires et/ou combinatoires. L'étape d'encodage fait souvent partie intégrante des procédés d'identification.

Su et al., MRA-GNN: Minutiae Relation-Aware Model over Graph Neural Network for Fingerprint Embedding. arXiv preprint arXiv:2307.16416, 2023 décrit une méthode d'encodage de dactylogrammes fondés sur leurs minuties. Dans un premier temps, la méthode procède à l'encodage de chaque minutie de chaque dactylogramme d'une pluralité de dactylogrammes candidats en graphes représentatifs de leurs relations topologiques. Dans un deuxième temps, chaque dactylogramme est encodé en graphe représentatif des structures de corrélation entre dactylogrammes plus proches voisins à partir des graphes relatifs à chacune de leurs minuties. Cet encodage est obtenu à l'aide d'un réseau de neurones en graphes (GNN - « Graph Neural Network ») mis en œuvre sur les dactylogrammes fournis sous la forme d'images dont les minuties sont extraites à l'aide d'un pré-encodeur. Les graphes se présentent sous la forme de vecteurs.

L'utilisation de la méthode comme moyen d'identification est limitée. Elle est en effet uniquement adaptée à l'identification d'un ensemble de dactylogrammes comprenant plusieurs dactylogrammes à identifier. Chacun d'entre eux doit faire préalablement l'objet d'un encodage en graphe selon la même approche des premiers voisins avant de pourvoir être comparé à chaque dactylogramme candidat via un critère appliqué au produit vectoriel des vecteurs représentatifs de leur graphe. Autrement dit, la méthode n'est pas adaptée à l'identification d'un seul et unique dactylogramme fourni comme donnée d'entrée.

Grosz et al., Minutiae-guided fingerprint embeddings via vision transformers. arXiv preprint arXiv:2210.13994, 2022 décrit une méthode d'encodage d'images de dactylogrammes sous la forme d'un vecteur de taille fixe. Les minuties de chaque image de dactylogramme sont tout d'abord extraites et représentées sous la forme d'une carte thermique (« heat map ») à deux canaux. Ensuite, les canaux de chaque carte thermique et l'image du dactylogramme correspondant sont concaténées ensemble, aplanis et fournis comme données d'entrée à un réseau de neurones de type Transformateur de Vision (« Vision Transformer ») tel que celui décrit dans VASWANI et al. Attention is all you need. Advances in neural information processing systems, vol. 30, 2017.L'identification d'un dactylogramme parmi un ensemble de dactylogrammes candidats est réalisée via une comparaison des vecteurs encodés dont le résultat est combiné avec ceux de méthodes d'identification fondées sur des réseaux de neurones convolutifs.

TANDON et al, Transformer based fingerprint feature extraction, 26th International Conference on Pattern Recognition (ICPR), 2022, décrit une méthode d'encodage d'une image de dactylogramme à l'aide d'un réseau de neurones convolutif fondé sur une approche de type Transformateur Convolutif (« Convolutional Transformer »). La méthode permet d'encoder une représentation générale du dactylogramme, prédire une liste de minuties et encoder une représentation locale de la liste des minuties prédites. L'identification d'un dactylogramme parmi un ensemble de dactylogrammes candidats se déroule en plusieurs étapes conditionnelles. Il est tout d'abord procédé à la comparaison des représentations globales des images des dactylogrammes. Si le score de similarité globale est supérieur à une valeur seuil, l'identification est validée. S'il est en-deçà, un score de similarité locale est calculé à partir de la comparaison des représentations locales fondées sur les minuties. Il est alors établi un score moyen entre le score de similarité globale et le score de similarité locale.

### Résumé de l'invention

### Problème technique

Un premier inconvénient des méthodes d'encodage d'images de dactylogrammes, qu'elles comprennent ou non l'encodage des minuties extraites desdites images de dactylogramme, est qu'elles requièrent que les images des dactylogrammes soient disponibles dans les bases de données existantes. Or, soit pour des raisons de stockage, soit par choix, les bases de données existantes peuvent être dépourvues de telles images. Ces méthodes peuvent être notamment inadaptées aux anciennes bases de données dans lesquelles seules les minuties sont disponibles.

Un deuxième inconvénient des méthodes d'encodage d'images de dactylogrammes est leur manque d'interopérabilité. Etant fondées sur des images, elles peuvent requérir un certain format et/ou une certaine qualité d'images. Or, le format et la qualité des images de dactylogrammes des bases de données existantes peuvent varier d'une base à l'autre. Pour pouvoir être implantées ces méthodes peuvent donc nécessiter des adaptations particulières selon les spécificités de chacune des bases de données, réduisant d'autant plus l'interopérabilité entre ces bases.

Un inconvénient des méthodes actuelles d'encodage des minuties en graphes représentatifs de leurs relations topologiques à l'aide de réseaux de neurones en graphes est leur inaptitude rédhibitoire à l'identification d'un seul et unique dactylogramme parmi un ensemble de dactylogrammes candidats. En outre, elles requièrent de réaliser des choix, plus ou moins arbitraires, parmi un ensemble de possibilités sur les plus proches voisins afin de construire les structures de corrélation entre dactylogrammes à partir des graphes relatifs à leurs minuties. Or, l'espace des possibilités étant quasiment infini, opérer de tels choix implique nécessairement de négliger certaines solutions dont certaines peuvent s'avérer optimales.

Il est donc toujours un besoin de perfectionner les méthodes d'encodage des minuties afin non seulement de réduire les temps de calcul lors d'une opération d'identification mais également d'assurer une meilleure interopérabilité des bases de données. En particulier, il est un besoin de méthodes d'encodages des minuties capables de fonctionner sur tout type de bases de données comprenant des listes de minuties et/ou sur des systèmes dont les capacités de stockage et/ou les ressources en calcul sont limitées.

### Solution technique

Selon un premier aspect de l'invention, il est fourni une méthode, mise en œuvre par ordinateur, d'encodage d'une liste de minuties d'un dactylogramme, ladite méthode prend, en données d'entrée, les coordonnées de chaque minutie d'une liste L de n minuties d'un dactylogramme dans un espace E à M dimensions, et fournit, en donnée de sortie, un vecteur d'encodage VE de taille fixe représentatif de la liste L des n minuties dudit dactylogramme, la méthode comprend les étapes suivantes :
(a) concaténer les coordonnées de chaque minutie de la liste L de n minuties sous la forme d'une matrice source MS de dimension (n, m) ;
(b) projeter la matrice source MS de dimension (n, m) vers un espace F à P dimensions, le nombre de dimensions P de l'espace F étant supérieur au nombre de dimensions M de l'espace E des coordonnées de chaque minutie, ladite projection étant réalisée à l'aide d'un modèle de projection Proj préalablement entrainé pour former une matrice projetée MP de dimension (n, p) ;
(c) inférer une matrice d'inférence MF de dimension (n+1, p) par application, sur la matrice intermédiaire MI, d'un réseau de neurones en graphes préalablement entrainé ;
(d) agréger les valeurs de la matrice d'inférence MF en un vecteur VE de taille fixe (1, p) à l'aide d'une modèle d'agrégation préalablement défini, ledit vecteur de taille fixe étant le vecteur d'encodage VE de taille fixe représentatif de la liste L des minuties du dactylogramme. Des modes avantageux de réalisation sont décrits ci-après.

Selon un deuxième aspect de l'invention, il est fourni un dispositif de traitement de données comprenant des moyens pour mettre en œuvre la méthode l'un des quelconques modes de réalisation du premier aspect de l'invention.

Selon un troisième aspect de l'invention, il est fourni un programme d'ordinateur comprenant des instructions qui, lorsque le programme est exécuté par un ordinateur, conduisent celui-ci à mettre en œuvre la méthode selon l'un des quelconques modes de réalisation du premier aspect de l'invention.

Selon un quatrième aspect de l'invention, il est fourni un support de stockage comprenant des instructions qui, lorsqu'elles sont exécutées par un ordinateur, conduisent celui-ci à mettre en œuvre la méthode selon l'un des quelconques modes de réalisation du premier aspect de l'invention

Selon un cinquième aspect de l'invention, il est fourni une méthode d'identification d'un dactylogramme parmi un ensemble de dactylogrammes comprenant une étape d'encodage à l'aide d'une méthode d'encodage selon le premier aspect de l'invention.

Selon un sixième aspect de l'invention, il est fourni un système d'identification d'un dactylogramme parmi un ensemble de dactylogrammes pour la mise en œuvre d'une méthode selon le cinquième aspect de l'invention.

### Avantages

Un premier avantage de l'invention est que l'encodage ne requiert aucune image de dactylogrammes. Elle peut donc être exploitée sur toute base de données de dactylogrammes comprenant des listes de minuties. En particulier, elle peut être exploitée sur d'anciennes bases de données qui sont dépourvues d'images de dactylogramme comme sur des bases de données plus récentes comprenant des images à partir desquelles des minuties sont susceptibles d'être extraites.

Un deuxième avantage de l'invention est la possibilité d'encoder des listes de minutie en un vecteur de taille fixe quelle que soit la taille de la liste fournie comme donnée d'entrée. Il est ainsi permis de comparer des paires de dactylogrammes dont le nombre de minuties disponibles pour chacun est différent. La méthode peut alors être mise en œuvre simultanément sur des bases de donnes différentes comprenant des nombres différents de minuties et/ou sur des listes de minuties de taille de différente au sein d'une même base de données. L'interopérabilité des bases de données est renforcée dans leur exploitation, y compris entre les anciennes bases de données qui sont dépourvues d'images de dactylogramme et les bases de données plus récentes comprenant des images à partir desquelles des minuties sont susceptibles d'être extraites.

Un troisième avantage de l'invention est l'insensibilité de l'encodage au nombre et à l'ordre des minuties dans listes de minuties fournies en données d'entrée. Le bruit statistique est réduit et les résultats des opérations ultérieures d'identification fondées sur la comparaison des vecteurs d'encodage sont plus précis.

### Brève description des dessins

Fig. 1 est une représentation graphique d'un exemple de liste de minuties d'un dactylogramme digital.
Fig. 2 est ordinogramme de la méthode selon le premier aspect de l'invention.
Fig. 3 est une représentation schématique d'une représentation d'une liste de minuties sous la forme d'une matrice.
Fig. 4 est une représentation schématique d'un exemple d'arrangement des valeurs dans une matrice intermédiaire conformément au premier aspect de l'invention.
Fig. 5 est une représentation d'un dispositif de traitement de données selon le deuxième aspect de l'invention.
Fig. 6 est une représentation graphique du taux de faux négatifs (FRR) en fonction du taux de faux positifs (FAR) lors d'une comparaison de listes de minuties encodées selon un exemple de réalisation de l'invention.

### Description détaillée des modes de réalisation

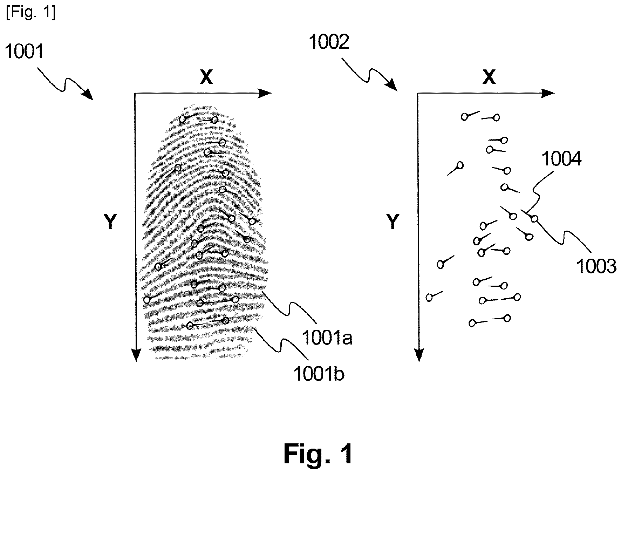

En référence à la Fig. 1, un dactylogramme digital 1001 est un dessin que forme les traces laissées sur les surfaces par les dermatoglyphes d'un doigt. Ce dessin représente les courbures des sillons 1001a et crêtes 1001b des plis papillaires ou épidermiques présents sur la pulpe du doigt. Elles forment généralement des lignes, des boucles et des spirales.

Les minuties 1002 sont des points singuliers et/ou des discontinuités présents le long des crêtes. Sur la Fig. 1, elles sont représentées par des cercles 1003 munis d'un segment 1004. Sur la partie gauche de la figure, elles sont superposées à l'image du dactylogramme 1001. Sur la partie droite, elles regroupées sous la forme d'un nuage sans l'image du dactylogramme.

Les minuties peuvent être, par exemple, des bifurcations comme les bifurcations droites ou gauches, les lacs et les ponts, ou des terminaisons comme les terminaisons droites ou gauches, les îles et les crochets. Elles peuvent être aussi des combinaisons de ces différents types.

Conformément à la norme ISO/IEC 19794-2:2005, Information Technology-Biometric Data Interchange Formats-Part 2: Finger Minutiae Data, 2005, il est courant de référencer chaque minutie 1002 par ses coordonnées dans un espace à trois dimensions à l'aide d'un uplet (« tuple ») ou vecteur de dimension trois (1,3). Les deux premières dimensions de cet uplet sont l'abscisse et l'ordonnée du point singulier représentant la minutie 1002 dans un repère cartésien X, Y du dactylogramme 1001 et la troisième dimension est l'angle d'orientation de la crête au niveau de la minutie par rapport à l'axe horizontal X des abscisses. Sur la Fig. 1, l'abscisse et l'ordonnée de chaque minutie sont représentées par le cercle 1003 et l'angle d'orientation par le segment 1004 attaché à ce cercle.

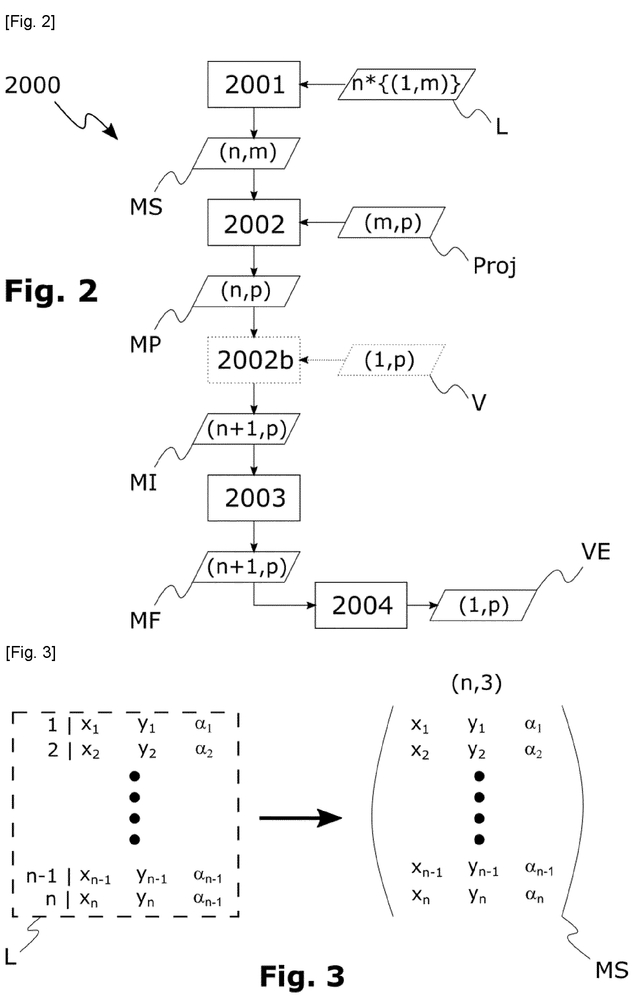

Selon un premier aspect de l'invention, en référence aux Fig. 1 & 2, il est fourni une méthode 2000, mise en œuvre par ordinateur, d'encodage d'une liste de minuties 1002 d'un dactylogramme 1001, ladite méthode 2000 prend, en données d'entrée, les coordonnées de chaque minutie d'une liste L de n minuties 1002 d'un dactylogramme 1001 dans un espace E à M dimensions, et fournit, en donnée de sortie, un vecteur d'encodage VE de taille fixe représentatif de la liste L des n minuties 1002 dudit dactylogramme 1001, la méthode 2000 comprend les étapes suivantes :
(a) concaténer 2001 les coordonnées de chaque minutie de la liste L de n minuties 1002 sous la forme d'une matrice source MS de dimension (n, m) ;
(b) projeter 2002 la matrice source MS de dimension (n, m) vers un espace F à P dimensions, le nombre de dimensions P de l'espace F étant supérieur au nombre de dimensions M de l'espace E des coordonnées de chaque minutie, ladite projection étant réalisée à l'aide d'un modèle de projection Proj préalablement entrainé pour former une matrice projetée MP de dimension (n, p) ;;
(c) inférer 2003 une matrice d'inférence MF de dimension (n+1, p) par application, sur la matrice intermédiaire MI, d'un réseau de neurones en graphes préalablement entrainé pour classer les dactylogrammes d'un ensemble de dactylogrammes à partir d'une liste L d'une pluralité de minuties desdits dactylogrammes ;
(d) agréger 2004 les valeurs de la matrice d'inférence MF en un vecteur VE de taille fixe (1, p) à l'aide d'une modèle d'agrégation préalablement entrainé, ledit vecteur de taille fixe étant le vecteur d'encodage VE de taille fixe représentatif de la liste L des minuties 1002 du dactylogramme 1001.

Dans le cadre de la présente invention, il est entendu par « réseau de neurones en graphes » (GNN ou « Graphical Neural Netwok »), un réseau de neurones en graphes tel que défini dans le domaine de l'apprentissage statistique ou automatique (« Machine Learning »), notamment les réseaux de neurones fondés sur l'exploitation des vecteurs caractéristiques (« embeddings ») pour encoder les propriétés de chaque nœud (« node embedding ») et de chaque arrête (« edge embedding ») d'une information susceptible d'être représentée sous la forme d'un graphe.

Dans le cadre de la présente invention, il est entendu par « coordonnées de chaque minutie » les coordonnées de tout système ou format de référencement permettant au moins de caractériser la position et l'orientation de chaque minutie dans un espace E à M dimensions. Cette interprétation couvre à la fois le système ou le format de référencement décrit dans la norme ISO/IEC 19794-2:2005, Information Technology-Biometric Data Interchange Formats-Part 2: Finger Minutiae Data, 2005, et tout autre système ou format aux fonctions équivalentes qui peut s'en différentier.

Selon un mode préféré de réalisation, l'espace E est de dimension 3 et les coordonnées de chaque minutie 1002 correspondent respectivement aux valeurs de son abscisse, de son ordonnée et de son angle d'orientation dans le repère (X, Y) du dactylogramme 1001. Les coordonnées d'une minutie 1002 peuvent alors être représentées sous la forme d'un uplet ou d'un vecteur de dimension (1, 3) dans un espace E à trois dimensions (M = 3). Ces coordonnées comprenant l'abscisse et l'ordonnée de la minutie dans un repère cartésien X, Y du dactylogramme 1001, et l'angle d'orientation de la crête au niveau de la minutie par rapport à l'axe horizontal des abscisses.

A titre d'exemple, à partir du format de référencement décrit dans la norme ISO/IEC 19794-2:2005, Information Technology-Biometric Data Interchange Formats-Part 2: Finger Minutiae Data, 2005, en référence à la Fig. 3, conformément à l'étape (a) de la méthode, une liste L de 'n' minuties 1002 peut être représentée sous la forme d'une matrice source MS de dimension (n, 3) par concaténation de leurs vecteurs de dimension (1,3), les colonnes représentant l'abscisse 'x', l'ordonnée 'y' et l'angle d'orientation 'α' de la minutie. Dans cet étape (a), pour n minuties, les valeurs de l'abscisse, de l'ordonnée et de l'angle de chaque minutie sont concaténées verticalement pour former les n lignes de la matrice source MS.

De manière équivalente, l'arrangement des valeurs peut être transposé : les valeurs de l'abscisse, de l'ordonnée et de l'angle de chaque minutie sont concaténées horizontalement pour former les n colonnes de la matrice source. Pour des raisons de concision, dans la suite du propos, il est fait uniquement référence à l'arrangement des valeurs de l'abscisse, de l'ordonnée et de l'angle de chaque minutie en colonnes pour former les n lignes de la matrice source. Une simple opération de transposition permet de passer d'un arrangement à l'autre.

A l'étape (b), la matrice source MS de dimension (n, m) fait l'objet d'une projection Proj vers un espace F à P dimensions, le nombre de dimensions P de l'espace F étant supérieur au nombre de dimensions M de l'espace E des coordonnées de chaque minutie. Cette projection est réalisée à l'aide d'un modèle de projection Proj préalablement entrainé pour former une matrice projetée MP de dimension (n, p). Elle permet d'enrichir les informations relatives aux coordonnées des minuties au travers de nouvelles dimensions qui serviront ensuite de support d'informations inférées lors de l'étape (d) d'inférence par le réseau de neurones en graphes. La nature des informations inférées sont déterminées lors de l'entraînement du modèle de projection et de celui du réseau de neurones en graphes de l'étape (d). Par exemple, ces informations supplémentaires peuvent, après entraînement, être certaines relations topologiques ou structures de corrélation entre minuties.

Selon des modes de réalisation, le modèle de projection Proj est une matrice de projection MP vers un espace F dont le nombre P de dimensions est arbitraire, de préférence vers un espace F de dimension P arbitraire d'au moins 32 fois la dimension M de l'espace E des coordonnées des minuties de la liste L de minuties 1002. A partir l'exemple de matrice source MS de dimension (n,3) décrit précédemment, le modèle de projection Proj peut être une matrice de projection de dimension (3,128) permettant de projeter la matrice source MS vers un espace de dimension d'au moins 32 fois la dimension M = 3 des coordonnées des minuties 1002. La matrice projetée MP, obtenue par application de la matrice de projection sur la matrice source via un simple calcul matriciel, a une dimension (n, 128). Aussi bien pour cet exemple que de manière plus générale, il convient de souligner que la dimension de la matrice de projection ne dépend pas du nombre de minuties de la matrice source.

A l'étape (c), la matrice intermédiaire MI est fournie, comme données d'entrée, à un réseau de neurones en graphes préalablement entrainé afin d'inférer une matrice d'inférence MF. Le réseau de neurones en graphes est préalablement entrainé pour classer les dactylogrammes d'un ensemble de dactylogrammes à partir d'une liste L d'une pluralité de minuties desdits dactylogrammes.

Le réseau de neurones en graphe et sa méthode d'entrainement sont de tout type adapté. La méthode d'entraînement peut notamment un apprentissage non-supervisé, supervisé, auto-supervisé ou leur combinaison. En particulier, il peut être un apprentissage supervisé de type « identité » dans lequel le réseau de neurones en graphe est entraîné pour classer chaque liste de minuties correspondant à un dactylogramme dans un ensemble d'entraînement en une identité ou classe correspondant audit dactylogramme. Autrement dit, chaque liste de minuties de l'ensemble d'entraînement est considérée comme une unique identité ou classe d'un dactylogramme lors de l'apprentissage.

Selon un mode préféré de réalisation, le réseau de neurones en graphes est un réseau neurones de type Transformateur (« Transformer »). Il est connu de l'état de la technique de mettre en œuvre ce type de neurones sur des images de dactylogramme. Dans le cadre de la présente invention, il a été constaté, de manière surprenante, que ce type de réseaux, lorsqu'ils sont mis en œuvre, non pas sur une image des minuties, mais sur leurs coordonnées, des performances similaires voire supérieures en termes de séquençage contextuel et d'encodage sont obtenues. Il résulte que, contrairement à ce qui était attendu, les coordonnées des minuties, qui constituent une information a priori moins riche que des images de dactylogrammes quant à leur relations topologiques, sont suffisantes pour bénéficier des performances d'un réseau de type Transformateur tout en en réduisant la complexité, la quantité de données à traiter et la charge de calcul.

Selon des modes avantageux de réalisation, le réseau de neurones de type Transformateur comprend une succession d'au moins 9 couches de type mécanisme d'attention (« Multi-Head Self-Attention ») en alternance avec un réseau de neurones de type perceptron multicouche (« Multi-Layer Perceptron »), et est dépourvu d'encodage positionnel. L'absence d'encodage positionnel permet de rendre la méthode insensible à la permutation des minuties dans la liste des minuties. Autrement dit, l'ordre dans lequel les uplets de chaque minutie sont arrangés dans une liste de minuties n'a pas d'incidence sur les résultats de l'encodage de ladite liste. Les couches de type mécanisme d'attention (« Multi-Head Self-Attention ») sont décrites dans VASWANI, Ashish et al. Attention is all you need. Advances in neural information processing systems, vol. 30, 2017.

A l'étape (d) les valeurs de la matrice d'inférence MF sont agrégées en un vecteur d'encodage VE de taille fixe à l'aide d'un modèle d'agrégation préalablement défini. A titre d'illustration, à partir de l'exemple de la matrice intermédiaire de dimension (n+1,128) décrit précédemment, cette agrégation consiste à réduire ladite matrice à une seule ligne pour former un vecteur de taille fixe de dimension (1,128).

Selon certains modes de réalisation, le modèle d'agrégation est une somme pondérée, pour chaque dimension P de l'espace F, entre les valeurs de la matrice d'inférence MF correspondant préalablement aux coordonnées du vecteur de la minutie factice V, la moyenne des valeurs de la matrice d'inférence MF correspondant préalablement à la matrice projetée MP et le maximum des valeurs de la matrice d'inférence MF.

Selon certains modes de réalisation, la méthode comprend, en outre, après l'étape (b) et avant l'étape (c), une étape (b2) de concaténation (2002b) de la matrice projetée avec un vecteur de coordonnées d'une minutie factice V de dimension (1, p) pour former une matrice intermédiaire MI de dimension (n+1, p), le vecteur de coordonnées de la minutie factice V ayant été préalablement déterminé lors de l'entrainement du réseau de neurones en graphes.

A l'étape (b2), la matrice projetée MP obtenue à l'étape (b) est concaténée avec un vecteur de coordonnées d'une minutie factice V de dimension (1,p). A partir l'exemple de la matrice projetée MP de dimension (n, 128) décrit précédemment, sa concaténation avec vecteur de coordonnées d'une minutie factice V de dimension (1,128) permet d'obtenir une matrice intermédiaire MI de dimension (n+1,128).

Le vecteur de coordonnées d'une minutie factice V a la fonction d'un jeton de classification tel qu'il est courant d'en utiliser dans les réseaux de neurones en graphes, notamment dans les réseaux de neurones en graphes de type Transformateur (« Transformer »). A ce titre, les articles de VASWANI et al. Attention is all you need. Advances in neural information processing systems, vol. 30, 2017 et de DOSOVITSKIY et al. An image is worth 16x16 words: Transformers for image recognition at scale. arXiv preprint arXiv:2010.11929, 2020, peuvent être consultés. Typiquement, les valeurs du vecteur de coordonnées d'une minutie factice V peut être aléatoires, par exemple selon une distribution normale, lors de son initialisation. Ces valeurs sont ensuite optimisées lors du processus d'entraînement préalable du réseau de neurones en graphes utilisé à l'étape (c).

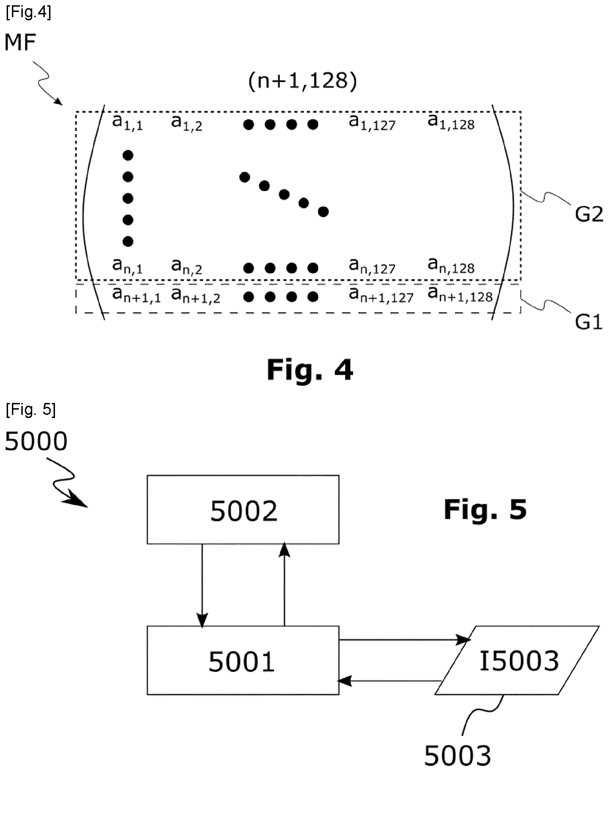

A titre d'illustration, en référence à la Fig. 4 et à partir de l'exemple précédent de la matrice d'inférence MF de dimension (n+1, 128), chaque colonne correspond à une des P dimensions de l'espace F. Les lignes de la matrice d'inférence MF peuvent être organisées en deux groupes :
- (G1) une ligne correspondant préalablement au vecteur de coordonnées de la minutie factice ;
- (G2) 'n' lignes correspondant préalablement à la matrice projeté MP avant sa concaténation avec le vecteur de coordonnées de la minutie factice MF.

Il est alors procédé, pour chacune des 128 colonnes, à la somme pondérée entre trois termes correspondant respectivement à la valeur du groupe (G1), la moyenne des valeurs des 'n' lignes du groupe (G2) et au maximum des valeurs de n+1 lignes de l'ensemble de la matrice d'inférence MF. Les facteurs de pondération sont de préférence tous positifs et leur somme est égale à l'unité. Leurs valeurs sont déterminées par une méthode d'apprentissage statistique telle que la descente de gradient, notamment lors de l'entraînement du modèle de projection et de celui du réseau de neurones en graphes de l'étape (d).

Selon certains modes de réalisation, la méthode comprend en outre, avant l'étape (a), une étape préalable de normalisation des coordonnées de chaque minutie dans laquelle les angles d'orientation sont remplacés par les valeurs de leur sinus et de leur cosinus. Autrement dit, la valeur de l'angle d'orientation de chaque minutie de la liste de minutie est remplacée par deux valeurs correspondant respectivement au sinus et au cosinus dudit angle, ou au cosinus et au sinus dudit angle. Une telle étape de normalisation est particulièrement avantageuse en ce qu'elle permet de réduire la sensibilité du réseau de neurones en graphes lors du passage, entre deux ou plusieurs minuties, d'un angle d'orientation de 359° à 0°. Dans le cadre spécifique de l'encodage d'une liste de minutie, la précision et la fiabilité lors de l'inférence de la matrice d'inférence sont sensiblement améliorées.

Dans le cas où les coordonnées d'une minutie sont représentées sous la forme d'un uplet ou d'un vecteur, cette étape préalable de normalisation entraîne un changement de la dimension dudit uplet ou vecteur. A titre d'exemple illustratif, pour une liste des coordonnées d'une minutie représentée sous la forme d'un uplet ou d'un vecteur de dimension (1, 3) comprenant l'abscisse et l'ordonnée de la minutie dans un repère cartésien X, Y du dactylogramme et l'angle d'orientation de la crête au niveau de la minutie par rapport à l'axe horizontal des abscisses, à l'issue de cette étape de normalisation, cet uplet ou ce vecteur devient un uplet ou un vecteur de dimension (1,4). Parmi les quatre dimensions en colonne, les deux première correspondent à l'abscisse et l'ordonnée de la minutie dans le repère cartésien X, Y du dactylogramme, et les troisième et quatrième correspondent au sinus, resp. cosinus, et au cosinus, resp. sinus, de l'angle d'orientation.

En conséquence de ce changement de dimension des uplets ou vecteurs représentant les coordonnées des minuties, toujours dans le cadre des exemples précédant, les dimensions de la matrice source et de la matrice de projection aux étapes (a) et (b) sont modifiées : la dimension de la matrice source est (n, 4) et, celle de la matrice de projection est (4,128).

La méthode selon le premier aspect de l'invention est mise en œuvre par ordinateur. En référence à la Fig. 5, dans un deuxième aspect de l'invention, il est fourni un dispositif 5000 de traitement de données comprenant des moyens pour la mise en œuvre d'une méthode 2000 selon l'un des quelconques modes de réalisation du premier aspect de l'invention.

Un exemple de dispositif peut être un dispositif chargé d'exécuter automatiquement des séquences d'opérations arithmétiques ou logiques pour réaliser des tâches ou des actions. Ce dispositif, également appelé ordinateur, peut comprendre une ou plusieurs unités centrales de traitement (CPU) et/ou un ou plusieurs processeurs graphiques (GPU) 5001 ainsi qu'au moins un dispositif de contrôle adapté à l'exécution de ces opérations. Il peut également comprendre d'autres composants électroniques tels que des interfaces d'entrée/sortie 5002, des dispositifs de stockage non volatils ou volatils 5003, et des bus de communication pour le transfert de données entre les composants internes du dispositif ou avec des composants externes. L'un des dispositifs d'entrée/sortie 5002 peut être une interface utilisateur pour l'interaction homme-machine, par exemple une interface utilisateur graphique pour afficher des informations compréhensibles par l'homme.

Selon un troisième aspect de l'invention, il est fourni un programme d'ordinateur I5003 comprenant des instructions qui, lorsque le programme est exécuté par un ordinateur, conduisent celui-ci à mettre en œuvre une méthode 2000 selon l'un des quelconques modes de réalisation du premier aspect de l'invention.

Tout type de langage de programmation, compilé ou interprété, peut être utilisé pour mettre en œuvre les étapes de la méthode de l'invention. Le programme d'ordinateur peut faire partie d'une solution logicielle, c'est-à-dire d'une collection d'instructions exécutables, de codes, de scripts ou autres et/ou de bases de données.

Selon un quatrième aspect de l'invention, il est fourni un support d'enregistrement 5003 lisible par ordinateur comprenant des instructions qui, lorsqu'elles sont exécutées par un ordinateur, conduisent celui-ci à mettre en œuvre une méthode 2000 selon l'un des quelconques modes de réalisation du premier aspect de l'invention.

Le support d'enregistrement 5003 lisible par ordinateur est de préférence une mémoire non volatile, par exemple un disque dur ou un lecteur à semiconducteurs. Il peut être un support de stockage amovible ou un support de stockage non amovible faisant partie d'un ordinateur.

Le support d'enregistrement 5003 lisible par ordinateur peut également être une mémoire volatile à l'intérieur d'un support amovible. Cela peut faciliter le déploiement de l'invention dans de nombreux sites de production.

Le support d'enregistrement 5003 lisible par ordinateur peut faire partie d'un ordinateur utilisé comme serveur à partir duquel des instructions exécutables peuvent être téléchargées et, lorsqu'elles sont exécutées par un ordinateur, faire en sorte que l'ordinateur exécute une méthode selon l'un des modes de réalisation décrits dans le présent document.

Le programme d'ordinateur I5003 et le support 5003 sur lequel il est enregistré peuvent être mis en œuvre dans un environnement informatique distribué, par exemple l'informatique en nuage. Les instructions peuvent être exécutées sur un serveur auquel un ou plusieurs ordinateurs clients peuvent se connecter et fournir des données codées en tant que données d'entrée d'une méthode selon l'un quelconque des modes de réalisation du premier aspect de l'invention. Une fois les données traitées, le résultat peut être téléchargé et décodé sur l'ordinateur client ou être envoyé directement, par exemple, sous forme d'instructions.

Selon un cinquième aspect de l'invention, il est fourni une méthode, mise en œuvre par ordinateur, d'identification d'un dactylogramme parmi un ensemble de dactylogrammes comprenant au moins un dactylogramme candidat, ladite méthode prend, en données d'entrée, les coordonnées associées à chaque minutie d'une liste de minuties d'un dactylogramme à identifier, et fournit, en donnée de sortie, un score de correspondance dudit dactylogramme à identifier avec au moins un dactylogramme candidat, ladite méthode comprenant les étapes suivantes :
(a) encoder les coordonnées associées à chaque minutie d'une liste de minuties dudit dactylogramme à identifier en vecteur de taille fixe à l'aide d'une méthode d'encodage selon l'un des quelconques modes de réalisation d'une méthode conformément au premier aspect de l'invention ;
(b) fournir un base de données contenant un ensemble de dactylogrammes comprenant au moins un dactylogramme candidat et dans laquelle les coordonnées associées à chaque minutie d'une liste de minuties de chacun des dactylogrammes candidats dudit ensemble sont encodées en un vecteur fixe à l'aide d'une méthode d'encodage selon l'un des quelconques modes de réalisation d'une méthode conformément au premier aspect de l'invention ;
(c) calculer un score de correspondance entre le vecteur calculé à l'étape (a) et chacun des vecteurs de la base de données ;
(d) sélectionner le score le plus élevés parmi les scores calculés à l'étape (c).

A l'étape (c), le calcul du score de correspondant entre le vecteur calculé à l'étape (a) et chacun des vecteurs de la base de données peut être mis en œuvre de toute manière adaptée. A titre d'exemple, il peut être un produit scalaire, un produit vectoriel ou une distance euclidienne.

Selon un sixième aspect de l'invention, il est fourni un système d'identification d'un dactylogramme avec au moins un dactylogramme candidat, ledit système comprend :
- un support de stockage sur lequel est enregistrée une base de données contenant un ensemble comprenant au moins un dactylogramme candidat et dans laquelle les coordonnées associées à chaque minutie d'une liste de minuties de chacun des dactylogrammes candidats dudit ensemble sont encodées en un vecteur fixe à l'aide d'une méthode d'encodage selon l'un des quelconques modes de réalisation d'une méthode conformément au premier aspect de l'invention ;
- un dispositif de traitement de données, par exemple un ordinateur, comprenant des moyens pour mettre en œuvre une méthode d'identification selon le cinquième aspect de l'invention.

Selon certains modes de réalisation, le système comprend en outre un dispositif d'acquisition d'une image d'un dactylogramme, le dispositif est configuré pour extraire les coordonnées d'une liste de minuties à partir de l'image d'un dactylogramme susceptible d'être obtenue par ledit dispositif d'acquisition.

Le dispositif d'acquisition est de tout type adapté. Des exemples, non limitatifs, de dispositifs d'acquisition sont décrits dans US 2012 014569 A1, IB KOREA LTD [KR], 19.01.2012 et US 2017 046554 A1, NEC CORP [JP], 16.02.2017.

L'extraction des coordonnées d'une liste de minuties à partir d'une image d'un dactylogramme est une pratique courante. Des exemples, non limitatifs, de méthode d'extraction sont décrits dans les articles BANSAL et al., Punam. Minutiae extraction from fingerprint images-a review. arXiv preprint arXiv:1201.1422, 2011, et MOHSEN et al., Automatic Fingerprint Recognition Using Minutiae Matching Technique for the Large Fingerprint Database. arXiv preprint arXiv:1304.2109, 2013. Les dispositifs d'acquisition de l'état de la technique peuvent être aisément adaptés pour l'implémentation de ces méthodes, notamment via leur propre unité de traitement de données ou l'adjonction d'une unité de traitement donnée dédiée.

### Exemple

Dans un exemple de réalisation, la méthode d'encodage prend, en données d'entrée, une liste des valeurs d'abscisse, d'ordonnée et d'angle d'orientation de 'n' minuties d'un dactylogramme dans le repère dudit dactylogramme. Elle comprend les étapes suivantes :
(a) normaliser, pour chaque minutie, des valeurs d'abscisse, d'ordonnée et d'angle d'orientation, lors de laquelle les angles d'orientation sont remplacés par les valeurs de leur sinus et de leur cosinus ;
(b) concaténer les valeurs normalisées des coordonnées de chaque minutie sous la forme d'une matrice source de dimension (n,4) ;
(c) projeter la matrice source à l'aide d'une matrice de projection de dimension (4,128) préalablement optimisée (entrainée) pour former une matrice projetée de dimension (n,128) ;
(d) concaténer la matrice projetée avec un vecteur de coordonnées d'une minutie factice de dimension (1, 128) pour former une matrice intermédiaire de dimension (n+1, 128) ;
(e) inférer une matrice d'inférence de dimension (n+1, 128) par application d'un réseau de neurones en graphes de type Transformateur (« Transformer ») préalablement entrainé ;
(f) agréger les valeurs de la matrice d'inférence à l'aide d'un une somme pondérée entre les valeurs de la matrice d'inférence pour chaque dimension représentant le vecteur de coordonnées de la minutie factice V, la moyenne des valeurs de la matrice d'inférence pour chaque dimension représentant les minuties de la matrice projeté MP et le maximum des valeurs de la matrice d'inférence pour chaque dimension.

Le réseau de neurones en graphe de type Transformateur comprend une succession de 9 couches de type mécanisme d'attention (« Multi-Head Self-Attention ») en alternance avec un réseau de neurones de type perceptron multicouche (« Multi-Layer Perceptron »), et est dépourvu d'encodage positionnel. Ce type de structure est décrit à la section 3.1 et illustré sur la Fig. 1 de l'article VASWANI, Ashish et al. Attention is all you need. Advances in neural information processing systems, vol. 30, 2017.

Le réseau de neurones en graphes de type Transformateur et la matrice de projection sont respectivement préalablement entraînés par une méthode d'apprentissage supervisé de type « identité » et une méthode d'apprentissage de type descente de gradients sur un ensemble d'entraînement comprenant les listes de minuties d'environ 1 million 8 cents miles images de dactylogrammes dans lequel il y au moins 6 images différentes du même dactylogramme. Autrement dit, l'ensemble d'entraînement comprend les listes de minuties de six images de trois cents miles dactylogrammes différents.

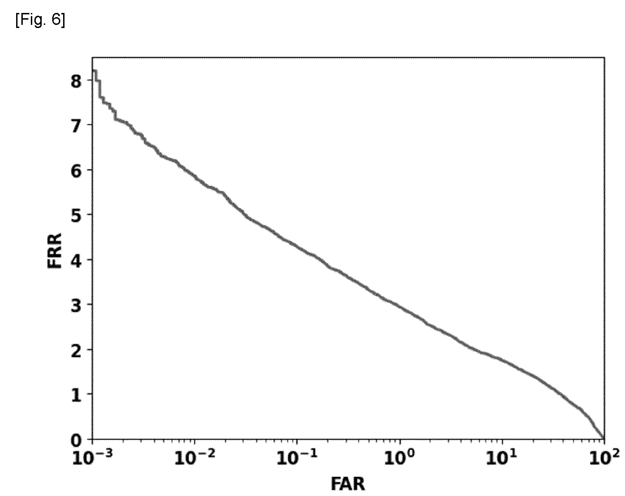

Les performances de la méthode ont été évaluées par comparaison des listes de minuties encodées à l'aide d'une méthode d'identification selon le cinquième aspect de l'invention, une base de données de listes de minuties étant encodées à cet effet. Les résultats de l'évaluation sont représentés sur la Fig. 6 représentant l'évolution du taux de faux négatifs (FRR) en fonction du taux de faux positifs (FAR). Pour un seuil correspondant à 0,01% (10-2) de faux positifs (FAR), le taux d'occurrence de faux négatifs (FRR) est seulement de 6,2%. La méthode étant capable, contrairement aux méthodes de l'état de la technique, de procéder à plusieurs millions de comparaisons par seconde, une telle valeur de taux la rend particulièrement avantageuse pour une utilisation comme première étape de criblage rapide et précise dans un procédé automatique d'identification.

### Références

### Littérature brevet

US 2012 014569 A1, IB KOREA LTD [KR], 19.01.2012.
US 2017 046554 A1, NEC CORP [JP], 16.02.2017.

### Littérature non-brevet

F. Galton, Fingerprint Directories. London, MacMillan & Co, 1895.
Henry Faulds, Guide to fingerprint Identification, Tokyo, Hanley, 1905.
E. Henry, Classification and uses of finger prints, published by his majesty's stationery office, London, 1913.
ISO/IEC 19794-2:2005, Information Technology-Biometric Data Interchange Formats-Part 2: Finger Minutiae Data, 2005.
BANSAL, Roli, SEHGAL, Priti, et BEDI, Punam. Minutiae extraction from fingerprint images-a review. arXiv preprint arXiv:1201.1422, 2011.
MOHSEN, S. M., FARHAN, S. M., et HASHEM, M. M. A. Automatic Fingerprint Recognition Using Minutiae Matching Technique for the Large Fingerprint Database. arXiv preprint arXiv:1304.2109, 2013.
VASWANI, Ashish, SHAZEER, Noam, PARMAR, Niki, et al. Attention is all you need. Advances in neural information processing systems, vol. 30, 2017.
DOSOVITSKIY, Alexey, BEYER, Lucas, KOLESNIKOV, Alexander, et al. An image is worth 16x16 words: Transformers for image recognition at scale. arXiv preprint arXiv:2010.11929, 2020.
GROSZ, Steven A., ENGELSMA, Joshua J., RANJAN, Rajeev, et al. Minutiae-guided fingerprint embeddings via vision transformers. arXiv preprint arXiv:2210.13994, 2022.
TANDON, Saraansh et NAMBOODIRI, Anoop. Transformer based fingerprint feature extraction. In : 2022 26th International Conference on Pattern Recognition (ICPR). IEEE, p. 870-876, 2022.
SU, Yapeng, ZHAO, Tong, et ZHANG, Zicheng. MRA-GNN: Minutiae Relation-Aware Model over Graph Neural Network for Fingerprint Embedding. arXiv preprint arXiv:2307.16416, 2023.

## Revendications

1. Méthode (2000), mise en œuvre par ordinateur, d'encodage d'une liste de minuties (1002) d'un dactylogramme (1001), ladite méthode (2000) prend, en données d'entrée, les coordonnées de chaque minutie d'une liste L de n minuties (1002) d'un dactylogramme (1001) dans un espace E à M dimensions, et fournit, en donnée de sortie, un vecteur d'encodage VE de taille fixe représentatif de la liste L des n minuties (1002) dudit dactylogramme (1001), la méthode (2000) comprend les étapes suivantes :
(a) concaténer (2001) les coordonnées de chaque minutie de la liste L de n minuties (1002) sous la forme d'une matrice source MS de dimension (n, m) ;
(b) projeter (2002) la matrice source MS de dimension (n, m) vers un espace F à P dimensions, le nombre de dimensions P de l'espace F étant supérieur au nombre de dimensions M de l'espace E des coordonnées de chaque minutie, ladite projection étant réalisée à l'aide d'un modèle de projection Proj préalablement entrainé pour former une matrice projetée MP de dimension (n, p) ;;
(c) inférer (2003) une matrice d'inférence MF de dimension (n+1, p) par application, sur la matrice intermédiaire MI, du réseau de neurones en graphes préalablement entrainé pour classer les dactylogrammes d'un ensemble de dactylogrammes à partir d'une liste L d'une pluralité de minuties desdits dactylogrammes ;
(d) agréger (2004) les valeurs de la matrice d'inférence MF en un vecteur VE de taille fixe (1, p) à l'aide d'une modèle d'agrégation préalablement défini, ledit vecteur de taille fixe étant le vecteur d'encodage VE de taille fixe représentatif de la liste L des minuties (1002) du dactylogramme (1001).

2. Méthode (2000) selon la revendication 1, telle qu'elle comprend, en outre, après l'étape (b) et avant l'étape (c), une étape (b2) de concaténation (2002b) de la matrice projetée avec un vecteur de coordonnées d'une minutie factice V de dimension (1, p) pour former une matrice intermédiaire MI de dimension (n+1, p), le vecteur de coordonnées de la minutie factice V ayant été préalablement déterminé lors de l'entrainement du réseau de neurones en graphes.

3. Méthode (2000) selon l'une quelconque des revendication 1 à 2, telle que le réseau de neurones en graphes est un réseau de neurones de type Transformateur.

4. Méthode (2000) selon la revendication 3, telle que le réseau de neurones de type Transformateur comprend une succession d'au moins 9 couches de type mécanisme d'attention en alternance avec un réseau de neurones de type perceptron multicouche, et est dépourvu d'encodage positionnel.

5. Méthode (2000) selon l'une quelconque des revendications 1 à 4 , telle que le modèle d'agrégation est une somme pondérée, pour chaque dimension P de l'espace F, entre les valeurs de la matrice d'inférence MF correspondant préalablement aux coordonnées du vecteur de la minutie factice V, la moyenne des valeurs de la matrice d'inférence MF correspondant préalablement à la matrice projetée MP et le maximum des valeurs de la matrice d'inférence MF.

6. Méthode (2000) selon l'une quelconque des revendications 1 à 5, telle que l'espace E est de dimension 3 et les coordonnées des minuties (1002) correspondent respectivement aux valeurs de son abscisse, de son ordonnée et de son angle d'orientation dans le repère (X, Y) du dactylogramme (1001).

7. Méthode selon l'une quelconque des revendications 1 à 6, telle qu'elle comprend en outre, avant l'étape (a), une étape préalable de normalisation des coordonnées de chaque minutie dans laquelle les angles d'orientation sont remplacés par les valeurs de leur sinus et de leur cosinus.

8. Méthode (2000) selon l'une quelconque des revendications 1 à 7, telle le modèle de projection Proj est une matrice de projection MP vers un espace F dont le nombre P de dimensions est arbitraire, de préférence vers un espace F de dimension P arbitraire d'au moins 32 fois la dimension M de l'espace E (1002).

9. Dispositif (5000) de traitement de données comprenant des moyens pour mettre en œuvre la méthode (2000) selon l'une quelconque des revendications 1 à 8.

10. Programme d'ordinateur (I5003) comprenant des instructions qui, lorsque le programme est exécuté par un ordinateur, conduisent celui-ci à mettre en œuvre la méthode (2000) selon l'une quelconque des revendications 1 à 8.

11. Support de stockage (5003) lisible par ordinateur comprenant des instructions qui, lorsqu'elles sont exécutées par un ordinateur, conduisent celui-ci à mettre en œuvre la méthode (2000) selon l'une quelconque des revendications 1 à 8.

12. Méthode, mise en œuvre par ordinateur, d'identification d'un dactylogramme parmi un ensemble de dactylogrammes comprenant au moins un dactylogramme candidat, ladite méthode prend, en données d'entrée, les coordonnées associées à chaque minutie d'une liste de minuties d'un dactylogramme à identifier, et fournit, en donnée de sortie, un score de correspondance dudit dactylogramme à identifier avec au moins un dactylogramme candidat, ladite méthode comprenant les étapes suivantes :
(a) encoder les coordonnées associées à chaque minutie d'une liste de minuties dudit dactylogramme à identifier en vecteur de taille fixe à l'aide d'une méthode d'encodage selon l'une quelconque des revendications 1 à 8 ;
(b) fournir un base de données contenant un ensemble de dactylogrammes comprenant au moins un dactylogramme candidat et dans laquelle les coordonnées associées à chaque minutie d'une liste de minuties de chacun des dactylogrammes candidats dudit ensemble sont encodées en un vecteur fixe à l'aide d'une méthode d'encodage selon l'une quelconque des revendications 1 à 7 ;
(c) calculer un score de correspondance entre le vecteur calculé à l'étape (a) et chacun des vecteurs de la base de données ;
(d) sélectionner le score le plus élevés parmi les scores calculés à l'étape (c).

13. Système d'identification d'un dactylogramme avec au moins un dactylogramme candidat, ledit système comprend :
- un support de stockage sur lequel est enregistrée une base de données contenant un ensemble comprenant au moins un dactylogramme candidat et dans laquelle les coordonnées associées à chaque minutie d'une liste de minuties de chacun des dactylogrammes candidats dudit ensemble sont encodées en un vecteur fixe à l'aide d'une méthode d'encodage selon l'une quelconque des revendications 1 à 8 ;
- un dispositif de traitement de données comprenant des moyens pour mettre en œuvre la méthode selon la revendication 11.

14. Système selon la revendication 13 comprenant en outre un dispositif d'acquisition d'une image d'un dactylogramme et dans lequel le dispositif est en outre configurée pour extraire les coordonnées d'une liste de minuties à partir de l'image d'un dactylogramme susceptible d'être obtenue par ledit dispositif.
